# EUROPÄISCHE PATENTSCHRIFT

(11) **EP 2 165 064 B1**
(45) Veröffentlichungstag und Bekanntmachung des Hinweises auf die Patenterteilung: **16.03.2011**
(21) Anmeldenummer: 08750149.0
(22) Anmeldetag: 07.05.2008
(51) Int. Cl.: F02D 41/00, F02D 19/08, F02D 41/06

(54) **VERFAHREN ZUR KRAFTSTOFFEINSPRITZUNG**
METHOD FOR FUEL INJECTION
PROCÉDÉ D'INJECTION DE CARBURANT

(30) Priorität: 06.06.2007 DE 102007026443
(43) Veröffentlichungstag der Anmeldung: 24.03.2010
(73) Patentinhaber: Robert Bosch GmbH, 70442 Stuttgart (DE)
(72) Erfinder: JOOS, Klaus, 74399 Walheim (DE); WOLBER, Jens, 70839 Gerlingen (DE); WEISS, Ruediger, 71159 Moetzingen (DE); HOLLMANN, Timm, 71726 Benningen A.n. (DE); DIETRICH, Manfred, 71706 Markgroeningen (DE); SCHENK, Peter, 71640 Ludwigsburg (DE); DANISMAN, Erkan, 71394 Kernen (DE)
(86) Internationale Anmeldenummer: PCT/EP2008/055630
(87) Internationale Veröffentlichungsnummer: WO 2008/148618

(56) Entgegenhaltungen:
- EP-A- 1 055 810
- EP-A- 1 178 203
- EP-A- 1 363 004
- EP-A- 1 496 228
- DE-A1- 4 025 018
- DE-A1- 4 035 503
- US-A- 5 179 926

## Beschreibung

### Stand der Technik

Die Erfindung betrifft ein Verfahren zum Start einer Brennkraftmaschine die mit einem Kraftstoff-Gemisch aus zumindest zwei Kraftstoffarten betrieben wird, wobei eine Einspritzung des Kraftstoffs in Brennräume der Brennkraftmaschine ab einer vorgegebenen Druckschwelle des Kraftstoffs in einer Kraftstoff-Zufuhr nach einem Hochdruck-Start-Modus vorgenommen wird und bei Unterschreitung der vorgegebenen Druckschwelle nach einem Niederdruck-Start-Modus vorgenommen wird.

Brennkraftmaschinen auf der Basis von Otto-Motoren werden allgemein mit Kraftstoff aus Kohlenwasserstoffen aus fossilen Brennstoffen auf Basis von raffiniertem Erdöl betrieben. Zu diesem Kraftstoff wird vermehrt aus nachwachsenden Rohstoffen (Pflanzen) erzeugtes Äthanol oder ein anderer Alkohol in unterschiedlichen Mischungsverhältnissen beigemengt. In den USA und Europa wird oft eine Mischung aus 70-85% Äthanol und 15-30% Benzin unter dem Markennamen E85 eingesetzt. Die Brennkraftmaschinen, siehe z.B. EP 1496228, sind so ausgelegt, dass sie sowohl mit reinem Benzin als auch mit Mischungen bis hin zu E85 betrieben werden können; dies wird mit "Flex-Fuel-Betrieb" bezeichnet. Für einen sparsamen Betrieb mit einem geringen Schadstoffausstoß bei gleichzeitig hoher Motorleistung und gutem Startverhalten müssen die Betriebsparameter im Flex-Fuel-Betrieb an die jeweilig vorliegende Kraftstoff-Mischung angepasst werden. Beispielhaft liegt ein stöchiometrisches Kraftstoff-LuftVerhältnis bei 14,7 Gewichtsanteilen Luft pro Anteil Benzin vor, bei Verwendung von reinem Äthanol muss jedoch ein Luftanteil von 9 Gewichtsanteilen eingestellt werden.

Beim Start von Otto-Motoren (fremdgezündeten Brennkraftmaschinen) wird eine HochdruckEinspritzung des Kraftstoffs erst bei Erreichen einer vorgegebenen Schwelle für den Druck im Einspritzsystem freigegeben, da nur dann eine gute Zerstäubungsqualität erreicht werden kann. Beispielhaft wird bei einem Otto-Motor mit Benzin-Direkteinspritzung die HochdruckEinspritzung erst freigegeben, wenn ein temperaturabhängiger Schwellwert des Kraftstoff-Drucks in einer Kraftstoff-Verteilerleitung wie beispielhaft in einem Common Rail Druckbehälter erreicht ist. Ein Hochdruck-Start bedeutet beispielhaft, dass ein Grossteil der für einen Verbrennungstakt vorgesehenen Kraftstoffmenge unter hohem Druck während eines Ansaugtakts der Brennkraftmaschine in einen Brennraum eingespritzt wird und eine homogene Zylinderfüllung bewirkt. In einer darauf folgenden Kompressionsphase erfolgt eine weitere Einspritzung, die eine Schichtladung bewirkt. Kurz nach dem Zündzeitpunkt kann eine dritte Einspritzphase vorgesehen sein. Alternativ kann auch die vorgesehene Kraftstoffmenge in nur einer Einspritzung während der Kompressionsphase abgesetzt werden.

Bei niedrigerem Druck als dem Schwellwert wird die Einspritzung im Niederdruck-Betrieb mit veränderten Einspritzparametern betrieben. Typisch erfolgt bei einem Niederdruck-Start eine Einspritzung in bis zu drei Teil-Einspritzungen, die alle vor dem Zündzeitpunkt erfolgen. Hierdurch wird einerseits eine gute Verteilung des Kraftstoffs im Brennraum und weiterhin eine Verringerung des Druckabfalls im Common-Rail erreicht. Die Einspritztakte können so gewählt sein, dass trotz des geringen Kraftstoff-Drucks ein Eindringen von Gasgemisch aus dem Brennraum in den Injektor verhindert wird. Der Schwellwert des Kraftstoff-Drucks kann hierbei abhängig von der Temperatur eines Kühlmittels oder des Brennraums der Brennkraftmaschine gewählt werden. Bei niedrigen Temperaturen schlägt sich vermehrt Kraftstoff an den Zylinderwandungen nieder, wird unverbrannt ausgestoßen und erhöht so die Emissionen. Dies wird beim Niederdruck-Start durch eine geringere erste Einspritzmenge vermindert, die ein Niederschlagen von Kraftstoff an der Zylinderwandung vermindert. Es kann vorgesehen sein, dass die Wahl der Einspritzparameter ausschließlich eine Schichtladung des Brennraums bewirkt.

Durch das beschriebene Vorgehen kann erreicht werden, dass Startemissionen reduziert werden und der Startvorgang mit einer verringerten Gefahr von Zündaussetzern erfolgt. Ein Niederdruck-Start erfolgt ebenfalls generell unter einer minimalen und oberhalb einer maximalen Temperatur, beispielhaft einer Kühlmitteltemperatur. Beispielhaft erfolgt der Niederdruck-Start unter -15°C und über 90°C. In dem Temperaturbereich dazwischen erfolgt ein Hochdruck-Start, wenn ein ausreichender Betriebsdruck von beispielhaft 10 bar erreicht ist. Wird ein solcher Otto-Motor mit einem Benzin-Äthanol-Gemisch betrieben, muss beim Start die Gemischzusammensetzung berücksichtigt werden, um ein einwandfreies Startverhalten zu erzielen. Dies ist nach dem Stand der Technik nicht berücksichtigt.

Es ist Aufgabe der Erfindung, ein Verfahren anzugeben, das bei einem Betrieb mit einem Benzin-Äthanol-Gemisch (FlexFuel-Betrieb) oder bei Verwendung eines Kraftstoff-Gemischs anderer Zusammensetzung ein Startverhalten wie bei reinem Benzin-Betrieb ermöglicht.

### Vorteile der Erfindung

Die Aufgabe der Erfindung wird dadurch gelöst, dass die Druckschwelle abhängig vom Mischungsverhältnis der Kraftstoffarten in dem Kraftstoff-Gemisch gewählt wird. Hierdurch kann erreicht werden, dass Unterschiede in der optimalen Gemischbildung der Kraftstoffarten berücksichtigt werden können. Es kann so bei einem Benzin-Äthanol-Gemisch berücksichtigt werden, dass beim Start einer fremdgezündeten Brennkraftmaschine für ein optimales Zünd- und Verbrennungsverhalten bei einem äthanolreichen Gemisch eine größere Kraftstoffmenge als bei einem benzinreichen Gemisch eingespritzt werden muss indem bei einem äthanolreichen Gemisch die Druckschwelle für eine Hochdruckzündung höher gewählt wird. Wird bei einem äthanolreichen Gemisch die Druckschwelle höher als bei einem äthanolärmeren Gemisch gewählt, ist die Reserve für Druckeinbrüche zudem größer, und Mengenfehler durch eine Druckdynamik wirken sich weniger aus. Beide Effekte verbessern das Startverhalten bei äthanolhaltigen Kraftstoff-Gemischen.

In einer Ausführungsform ist vorgesehen, dass das erfindungsgemäße Verfahren bei einem Kraftstoff verwendet wird, bei dem das Kraftstoff-Gemisch aus Benzin und Äthanol gebildet wird. Dieses Kraftstoff-Gemisch wird in USA und Europa verwendet. Es ist vorgesehen, dass die mit diesem Kraftstoff-Gemisch betriebenen Fahrzeuge mit einem Kraftstoff-Gemisch vorgegebener Zusammensetzung, beispielhaft E85, als auch mit Benzin oder Äthanol betankt werden können. Dieser als FlexFuel-Betrieb bezeichnete Betrieb bewirkt, dass nach einem Tankvorgang eine beliebige Zusammensetzung des Kraftstoff-Gemischs zwischen reinem Benzin und reinem Äthanol vorliegen kann. Die Zusammensetzung des Kraftstoff-Gemischs muss bei der Dosierung des Kraftstoffs im Betrieb als auch beim Startvorgang berücksichtigt werden. Beim Startvorgang ist die Zusammensetzung des Kraftstoff-Gemischs aus dem letzten Fahrzyklus oder aus einer Abschätzung nach dem Tankvorgang bekannt; es kann auch ein Äthanolsensor zur Bestimmung des Äthanolgehalts vorgesehen sein. Aus diesen Daten kann für einen optimalen Startvorgang die Druckschwelle für die Freigabe des Hochdruckstarts erfindungsgemäß angepasst werden.

Wird die Druckschwelle abhängig vom Anteil einer der Kraftstoffarten und/oder abhängig von der Temperatur eines Kühlmittels und/oder eines Brennraums der Brennkraftmaschine und/oder des Kraftstoff-Gemischs und/oder der Umgebungsluft und/oder der Ansaugluft festgelegt, kann das Startverhalten der Brennkraftmaschine weiter verbessert werden. Bei der Festlegung der Druckschwelle müssen nicht alle Komponenten des Kraftstoff-Gemischs berücksichtigt werden; oft reicht es aus, nur eine der Komponenten, wie beispielhaft den Äthanolgehalt, zu berücksichtigen. Die Berücksichtigung der Temperatur des Systems bei der Freigabe des Hochdruckstarts verbessert weiter das Startverhalten. Die zu berücksichtigende Temperatur kann dabei aus einer oder mehreren das System kennzeichnenden Temperaturen gebildet werden. Es kann erfindungsgemäß vorgesehen sein, dass die Druckschwelle additiv aus einer vom Anteil einer Kraftstoffart abhängigen Druckschwelle und einer von der Temperatur abhängigen Druckschwelle gebildet wird.

Eine Weiterbildung des erfindungsgemäßen Verfahrens sieht vor, dass die Druckschwelle in einem Kennfeld abhängig von der Temperatur des Kühlmittels und/oder des Brennraums der Brennkraftmaschine und/oder des Kraftstoffs und/oder der Umgebungsluft und/oder der Ansaugluft und dem Mischungsverhältnis der Kraftstoffarten in dem Kraftstoff-Gemisch festgelegt wird.

Eine Verfahrensvariante, die das Verdampfungsverhalten der Kraftstoffarten bei niedriger Temperatur berücksichtigt, sieht vor, dass unterhalb einer ersten vorgebbaren Temperaturschwelle und oberhalb einer zweiten vorgebbaren Temperaturschwelle ein Niederdruck-Start vorgenommen wird, dass in einem Temperaturbereich zwischen der ersten und der zweiten Temperaturschwelle ein Hochdruckstart vorgenommen wird und dass die erste und die zweite Temperaturschwelle in Abhängigkeit von der Zusammensetzung des Kraftstoff-Gemischs festgelegt werden. In dieser Verfahrensvariante wird auch berücksichtigt, dass bei hoher Systemtemperatur oft ein ausreichend hoher Kraftstoff-Druck nicht zuverlässig bereitgestellt werden kann.

## Patentansprüche

1. Verfahren zum Start einer Brennkraftmaschine die mit einem Kraftstoff-Gemisch aus zumindest zwei Kraftstoffarten betrieben wird, **dadurch gekennzeichnet, dass** eine Einspritzung des Kraftstoffs in Brennräume der Brennkraftmaschine ab einer vorgegebenen Druckschwelle des Kraftstoffs in einer Kraftstoff-Zufuhr nach einem Hochdruck-Start-Modus vorgenommen wird und bei Unterschreitung der vorgegebenen Druckschwelle nach einem Nie-derdruck-Start-Modus vorgenommen wird, wobei die Druckschwelle abhängig vom Mischungsverhältnis der Kraftstoffarten in dem Kraftstoff-Gemisch gewählt wird.

2. Verfahren nach Anspruch 1, **dadurch gekennzeichnet, dass** das Kraftstoff-Gemisch aus Benzin und Äthanol gebildet wird.

3. Verfahren nach Anspruch 1 oder 2, **dadurch gekennzeichnet, dass** die Druckschwelle abhängig vom Anteil einer der Kraftstoffarten und/oder abhängig von der Temperatur eines Kühlmittels und/oder eines Brennraums der Brennkraftmaschine und/oder des Kraftstoff-Gemischs und/oder der Umgebungsluft und/oder der Ansaugluft festgelegt wird.

4. Verfahren nach Anspruch 3, **dadurch gekennzeichnet, dass** die Druckschwelle in einem Kennfeld abhängig von der Temperatur des Kühlmittels und/oder des Brennraums der Brennkraftmaschine und/oder des Kraftstoffs und/oder der Umgebungsluft und/oder der Ansaugluft und dem Mischungsverhältnis der Kraftstoffarten in dem Kraftstoff-Gemisch festgelegt wird.

5. Verfahren nach einem der Ansprüche 1 bis 4, **dadurch gekennzeichnet, dass** unterhalb einer ersten vorgebbaren Temperaturschwelle und oberhalb einer zweiten vorgebbaren Temperaturschwelle ein Niederdruck-Start vorgenommen wird, dass in einem Temperaturbereich zwischen der ersten und der zweiten Temperaturschwelle ein Hochdruckstart vorgenommen wird und dass die erste und die zweite Temperaturschwelle in Abhängigkeit von der Zusammensetzung des Kraftstoff-Gemischs festgelegt werden.

## Claims

1. Method for starting an internal combustion engine which is operated with a fuel mixture composed of at least two fuel types, **characterized in that** an injection of the fuel into combustion chambers of the internal combustion engine is carried out according to a high-pressure-start mode above a predefined pressure threshold of the fuel in a fuel supply, and is carried out according to a low-pressure-start mode if the predefined pressure threshold is undershot, with the pressure threshold being selected as a function of the mixing ratio of the fuel types in the fuel mixture.

2. Method according to Claim 1, **characterized in that** the fuel mixture is formed from benzine and ethanol.

3. Method according to Claim 1 or 2, **characterized in that** the pressure threshold is defined as a function of the proportion of one of the fuel types and/or as a function of the temperature of a coolant and/or of a combustion chamber of the internal combustion engine and/or of the fuel mixture and/or of the ambient air and/or of the intake air.

4. Method according to Claim 3, **characterized in that** the pressure threshold is defined in a characteristic map as a function of the temperature of the coolant and/or of the combustion chamber of the internal combustion engine and/or of the fuel and/or of the ambient air and/or of the intake air and as a function of the mixing ratio of the fuel types in the fuel mixture.

5. Method according to one of Claims 1 to 4, **characterized in that** a low-pressure start is carried out below a first predefinable temperature threshold and above a second predefinable temperature threshold, **in that** a high-pressure start is carried out in a temperature range between the first and second temperature thresholds, and **in that** the first and second temperature thresholds are defined as a function of the composition of the fuel mixture.

## Revendications

1. Procédé pour démarrer un moteur à combustion interne qui fonctionne avec un mélange de carburant constitué d'au moins deux types de carburant, **caractérisé en ce qu'**une injection du carburant dans des chambres de combustion du moteur à combustion interne est effectuée à partir d'un seuil de pression prédéfini du carburant dans une alimentation en carburant conformément à un mode de démarrage à haute pression, et si le seuil de pression prédéfini n'est pas atteint, conformément à un mode de démarrage à basse pression, le seuil de pression étant sélectionné en fonction du rapport de mélange des types de carburant dans le mélange de carburant.

2. Procédé selon la revendication 1, **caractérisé en ce que** le mélange de carburant est constitué d'essence et d'éthanol.

3. Procédé selon la revendication 1 ou 2, **caractérisé en ce que** le seuil de pression est fixé en fonction de la proportion de l'un des types de carburant et/ou en fonction de la température d'un réfrigérant et/ou d'une chambre de combustion du moteur à combustion interne et/ou du mélange de carburant et/ou de l'air ambiant et/ou de l'air d'admission.

4. Procédé selon la revendication 3, **caractérisé en ce que** le seuil de pression est fixé dans un champ caractéristique en fonction de la température du réfrigérant et/ou de la chambre de combustion du moteur à combustion interne et/ou du carburant et/ou de l'air ambiant et/ou de l'air d'admission et du rapport de mélange des types de carburant dans le mélange de carburant.

5. Procédé selon l'une quelconque des revendications 1 à 4, **caractérisé en ce qu'**en dessous d'un seuil de température prédéfinissable et au-dessus d'un deuxième seuil de température prédéfinissable, un démarrage à basse pression est effectué, **en ce que** dans une plage de température entre le premier et le deuxième seuil de température, un démarrage à haute pression est effectué, et **en ce que** le premier et le deuxième seuil de température sont fixés en fonction de la composition du mélange de carburant.
